# FASCICULE DE BREVET EUROPEEN

(11) **EP 2 714 757 B1**
(45) Date de publication et mention de la délivrance du brevet: **27.07.2016**
(21) Numéro de dépôt: 12725682.4
(22) Date de dépôt: 24.05.2012
(51) Int. Cl.: C08F 283/00, C08G 61/12, C08G 85/00, C08J 7/12

(54) **PROCEDE POUR MODIFIER UN POLYMERE DE POLYDOPAMINE OU UN DERIVE DE CELUI-CI ET POLYMERE AINSI MODIFIE**
VERFAHREN ZUR MODIFIZIERUNG EINES POLYDOPAMINPOLYMERS ODER EINES DERIVAT DAVON UND AUF DIESE WEISE MODIFIZIERTES POLYMER
PROCESS FOR MODIFYING A POLYDOPAMINE POLYMER OR A DERIVATIVE THEREOF, AND POLYMER THUS MODIFIED

(30) Priorité: 25.05.2011 FR 1154553
(43) Date de publication de la demande: 09.04.2014
(73) Titulaire: Commissariat à l'Énergie Atomique et aux Énergies Alternatives, 75015 Paris (FR)
(72) Inventeur: BERTHELOT, Thomas, F-91940 Les Ulis (FR); VIEL, Pascal, F-92190 Meudon (FR)
(74) Mandataire: Ahner, Philippe
(86) Numéro de dépôt international: PCT/EP2012/059654
(87) Numéro de publication internationale: WO 2012/160120

(56) Documents cités:
- WO-A2-2008/078052
- RONGJU ZENG ET AL: "A novel PEG coating immobilized onto capillary through polydopamine coating for separation of proteins in CE", ELECTROPHORESIS, vol. 31, no. 19, 1 octobre 2010 (2010-10-01), pages 3334-3341, XP055014789, ISSN: 0173-0835, DOI: 10.1002/elps.201000228
- WEN-CAI WANG ET AL: "Surface initiated ATRP of acrylic acid on dopamine-functionalized AAO membranes", JOURNAL OF APPLIED POLYMER SCIENCE, 1 janvier 2010 (2010-01-01), pages NA-NA, XP055014790, ISSN: 0021-8995, DOI: 10.1002/app.30939
- SAMIA MAHOUCHE-CHERGUI ET AL: "Aryl diazonium salts: a new class of coupling agents for bonding polymers, biomacromolecules and nanoparticles to surfaces", CHEMICAL SOCIETY REVIEWS, vol. 40, no. 7, 1 janvier 2011 (2011-01-01), page 4143, XP055014827, ISSN: 0306-0012, DOI: 10.1039/c0cs00179a

## Description

### DOMAINE TECHNIQUE

La présente invention appartient au domaine général des polymères et notamment des polymères de type polydopamine.

Plus particulièrement, la présente invention concerne un procédé en une étape pour modifier un polymère de polydopamine ou un de ses dérivés par greffage covalent d'un polymère organique sur le polymère de polydopamine ou son dérivé.

La présente invention concerne également le polymère de polydopamine ou son dérivé modifié par un tel procédé.

### ÉTAT DE LA TECHNIQUE ANTÉRIEURE

La dopamine est connue, en biologie et en médecine, en tant que neurotransmetteur de la famille des catécholamines et trouve, de ce fait, de nombreuses applications thérapeutiques.

Pour rappel, la dopamine est également connue sous le nom de (3,4-dihydroxyphényl)ethylamine. La dopamine et le polymère issu de la polymérisation de la dopamine qu'est la polydopamine présentent les structures chimiques suivantes :

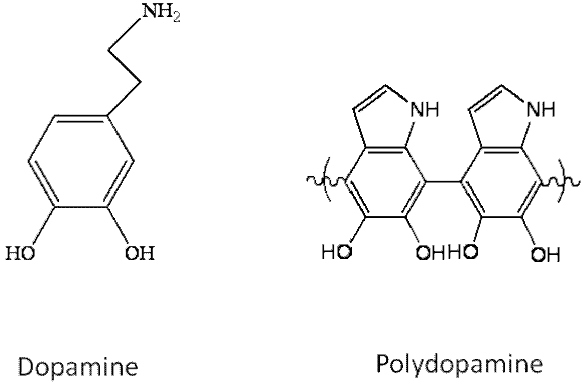

D'un point de vue réactionnel et comme décrit dans la littérature, les groupements catéchols de la dopamine polymérisent et les bras aminés se referment sur le cycle catéchol pour donner la polydopamine.

Depuis quelques années, la dopamine et la polydopamine sont décrites, comme étant capables de se greffer ou au moins de s'adsorber fortement sur un large éventail de substrats organiques comme inorganiques tels que des semiconducteurs, des polymères éventuellement fluorés, des métaux nobles ou des oxydes [1]. Dans cet article, Lee et *al*. ont décrit un mécanisme biologique utilisé par les moules pour s'accrocher aux rochers. Plus particulièrement, les moules utilisent des films de polydopamine pour adhérer aux surfaces. Lee et *al*. ont démontré que, en ajoutant un objet dans une solution de dopamine dans du tampon TRIS, un film mince de polydopamine apparaît à la surface de l'objet par auto-polymérisation de la dopamine.

La polydopamine se comporte comme un nouveau type de revêtement ou, pour l'environnement de la surface revêtue, comme un nouveau matériau. Ainsi, la dopamine et la polydopamine constituent un nouvel outil notamment utile dans le domaine des matériaux, des biocapteurs, des dispositifs biomédicaux, de la métallisation des surfaces, etc...

Toutefois, pour ces différentes applications, il peut être nécessaire de greffer, sur la polydopamine, des macromolécules du type polymère pour en modifier les propriétés notamment afin de la rendre, par exemple, bio-inerte, bio-active ou hydrophobe.

La demande internationale WO 2008/049108 [2] propose des substrats revêtus d'une couche obtenue à partir de la polymérisation d'agents modifiant la surface (SMA pour « Surface-Modifying Agent »). Ces agents ont une structure définie par la formule (I) et s'apparentent à la dopamine.

La demande internationale WO 2008/049108 propose également de modifier (ou de fonctionnaliser) la couche de SMA polymérisés avec une couche additionnelle comprenant au moins une entité réactive telle que des métaux, des nucléophiles ou des polymères. La fonctionnalisation de la couche de SMA polymérisés implique l'utilisation de SMA portant des groupements réactifs aptes à réagir avec d'autres groupements réactifs portés par les polymères à greffer sur la couche de SMA polymérisés.

Cette procédure implique donc, d'une part, l'utilisation de SMA particuliers, par exemple, des SMA portant des groupements thiols et, d'autre part, l'utilisation de polymères produits préalablement au greffage et portant des groupements aptes à former une liaison covalente lorsque réagissant avec un groupement thiol, ces derniers groupements étant avantageusement des groupements aminés. En d'autres termes, cette fonctionnalisation nécessite plusieurs étapes telles que la synthèse des polymères et leur éventuelle modification pour y introduire les groupements réactifs et des couples SMA/polymère préalablement sélectionnés pour qu'un greffage covalent puisse avoir lieu.

Compte tenu de l'intérêt croissant des polymères de polydopamine, les inventeurs se sont fixés pour but de mettre au point un procédé permettant de modifier un polymère de polydopamine sans nécessiter l'utilisation de dérivés particuliers de dopamine ou de composés particuliers pré-synthétisés et la mise en oeuvre de différentes étapes.

### EXPOSÉ DE L'INVENTION

La présente invention permet d'atteindre le but que se sont fixés les inventeurs et concerne donc un procédé amélioré et simplifié pour modifier un polymère de polydopamine. La présente invention s'applique non seulement à un polymère de polydopamine mais également à tout dérivé d'un polymère de polydopamine notamment tel qu'il sera défini ci-après.

En effet, les inventeurs ont montré que le procédé de greffage chimique radicalaire décrit dans la demande internationale WO 2008/078052 **[3]** peut être efficacement mis en oeuvre pour modifier un polymère de polydopamine.

Il convient de noter que, de par la nature du polymère de polydopamine et de l'enseignement de la demande internationale WO 2008/049108 **[2],** l'homme du métier aurait été dissuadé de mettre en oeuvre le procédé de greffage chimique radicalaire décrit dans la demande internationale WO 2008/078052 **[3]** pour modifier un polymère de dopamine. En effet, le greffage chimique radicalaire décrit dans la demande internationale WO 2008/078052 **[3]** implique l'utilisation d'agents réducteurs, de solutions réactives, éventuellement aqueuses, dont le pH est inférieur à 7 et notamment compris entre 0 et 3. Or, dans la demande internationale WO 2008/049108 **[2],** la couche de SAM polymérisés est maintenue dans des conditions généralement basiques et éventuellement en présence d'un oxydant. Ceci est d'ailleurs à corréler avec le paragraphe [0135] de la demande internationale WO 2008/049108 concernant un kit qui doit être vendu à un pH < 7 voire très acide pour éviter la polymérisation de la dopamine.

Ainsi, la présente invention concerne ainsi un procédé pour modifier un polymère de polydopamine ou un dérivé de celui-ci consistant à greffer, sur ledit polymère ou ledit dérivé, au moins un polymère organique par greffage chimique radicalaire en présence d'au moins un sel d'aryle clivable.

Par « dérivé de polymère de polydopamine », on entend un polymère obtenu par polymérisation d'un composé de formule (I) telle que définie dans la demande internationale WO 2008/049108 **[2].** Plus précisément, la formule (I) est la suivante : 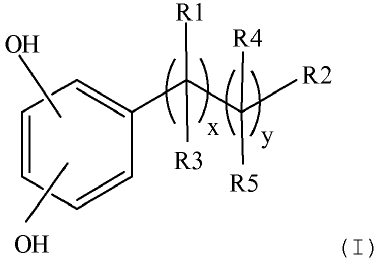 dans laquelle :
- les groupements R1, R2, R3, R4 et R5 sont indépendamment choisis dans le groupe constitué par un hydrogène, un hydroxyle, un halogénure, un thiol, un aldéhyde, un acide carboxylique, un ester carboxylique, un carboxamide, une amine primaire, une amine secondaire, un nitrile, un imidazole, un azide et un dithiocarbamate de polyhexaméthylène ;
   à condition qu'au moins un groupement parmi les groupements R1, R2, R3, R4 et R5 ne soit pas un hydrogène ;
- x est égal à 0 ou représente un nombre entier compris de 1 à 10, les bornes 1 et 10 étant inclusives ; et
- y est égal à 0 ou représente un nombre entier compris de 1 à 10, les bornes 1 et 10 étant inclusives ;
à condition que x ou y soit au moins égal à 1.

La présente invention s'applique également à toutes les variantes et toutes les formes de mises en oeuvre préférées des composés de formule (I) telles que décrites dans la demande internationale WO 2008/049108 **[2].**

En particulier, le composé dont la polymérisation aboutit à un dérivé de polydopamine répond à la formule (II) suivants : 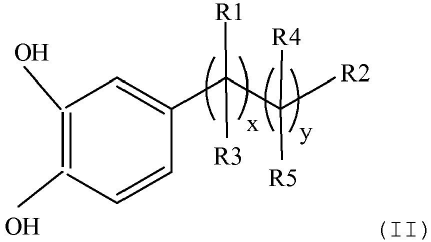 dans laquelle les groupements R1, R2, R3, R4 et R5, x et y sont tels que définis pour la formule (I).

Plus particulièrement, le composé dont la polymérisation aboutit à un dérivé de polydopamine est choisi parmi la norépinephrine (composé de formule (II) dans laquelle R1 = OH, R2 = NH₂ et R3 = R4 = R5 = H), la 3,4-dihydroxy-L-phénylalanine (composé de formule (II) dans laquelle R1 = R3 = R5 = H, R2 = COOH et R4 = NH₂), l'ester méthylique de 3,4-dihydroxy-L-phénylalanine (composé de formule (II) dans laquelle R1 = R3 = R5 = H, R2 = COOCH₃ et R4 = NH₂) et un de leurs sels.

Le polymère de polydopamine ou son dérivé mis en oeuvre peut être préparé par toute technique de polymérisation connue de l'homme du métier. Cette technique peut être une électropolymérisation de dopamine, d'un composé de formule (I) ou (II) telle que définie ci-dessus ou d'un de leurs sels sur un substrat conducteur **[4].** En variante, il peut s'agir d'une polymérisation, dans des conditions oxydantes, de dopamine, d'un composé de formule (I) ou (II) telle que définie ci-dessus ou d'un de leurs sels en solution dans une solution alcaline. Un tel procédé est notamment décrit dans la demande internationale WO 2008/049108 **[2].** De plus, la partie expérimentale ci-après propose, à titre d'exemple, un protocole particulier d'un tel procédé.

Dans le cadre de la présente invention, le polymère de polydopamine ou d'un de ses dérivés peut être mis en oeuvre, déposé sur un substrat. Comme décrit dans l'article de Lee et *al*. **[1]** et dans la demande internationale WO 2008/049108 **[2],** ce substrat peut être un quelconque substrat organique ou inorganique, notamment décrit dans ces états de la technique.

La présente invention met en oeuvre, en d'autres termes, une solution réactive comprenant au moins un sel d'aryle clivable et des conditions non électrochimiques permettant le greffage chimique radicalaire de dérivés dudit sel sur le polymère de polydopamine ou son dérivé.

Le terme « greffage chimique radicalaire » a, dans la présente invention, la même définition que dans la demande internationale WO 2008/078052 **[3].** Il se réfère ainsi à l'utilisation d'entités moléculaires possédant un électron non apparié pour former des liaisons de type liaison covalente avec le polymère de polydopamine ou un de ses dérivés, lesdites entités moléculaires étant générées indépendamment du polymère de polydopamine ou de son dérivé sur lequel elles sont destinées à être greffées. La réaction radicalaire conduit donc à la formation de liaisons covalentes entre le polymère de polydopamine ou son dérivé et le (ou les) polymère(s) organique(s).

Les polymères organiques greffés à la surface du polymère de polydopamine ou de son dérivé forment une couche organique qui peut être définie comme un film organique greffé à la surface du polymère de polydopamine ou de son dérivé.

Le (ou les) polymère(s) organique(s) greffé(s) à la surface du polymère de polydopamine ou de son dérivé est un (co)polymère principalement issu de plusieurs unités monomères identiques et/ou différentes.

Comme envisagé dans la demande internationale WO 2008/078052, les unités monomères dont est issu chaque polymère organique sont des unités dérivées d'au moins un sel d'aryle clivable et éventuellement d'au moins un monomère polymérisable par voie radicalaire avantageusement distinct d'un sel d'aryle clivable. La première unité moléculaire de chaque polymère organique greffé est issue d'un sel d'aryle clivable.

Pour rappel et comme envisagé dans la demande internationale WO 2008/078052, les unités monomères dont est issu chaque polymère organique peuvent être des unités uniquement dérivées d'un (ou plusieurs) sel (s) d'aryle clivable (s) et ce, lorsqu'aucun monomère polymérisable par voie radicalaire distinct d'un sel d'aryle clivable n'est mis en oeuvre. A noter que, dans cette forme de mise en oeuvre, un polymère organique peut être obtenu et pas uniquement le simple greffage d'un groupe, tel qu'un groupe aryle, lié au sel d'aryle clivable.

Par « sel d'aryle clivable », on entend, dans le cadre de la présente invention, un sel d'aryle clivable choisi dans le groupe constitué par les sels d'aryle diazonium, les sels d'aryle d'ammonium, les sels d'aryle phosphonium et les sels d'aryle sulfonium. Dans ces sels, le groupe aryle est un groupe aryle qui peut être représenté par R tel que défini ci-après.

Parmi les sels d'aryle clivables, on peut en particulier citer les composés de formule (III) suivants :

R-N₂⁺, A⁻ (III)

dans laquelle :
- A représente un anion monovalent et
- R représente un groupe aryle.

A titre de groupe aryle des sels d'aryle clivables et notamment des composés de formule (III) ci-dessus, on peut avantageusement citer les structures carbonées aromatiques ou hétéroaromatiques, éventuellement mono- ou polysubstituées, constituées d'un ou plusieurs cycles aromatiques ou hétéroaromatiques comportant chacun de 3 à 8 atomes, le ou les hétéroatomes pouvant être N, O, P ou S. Le ou les substituants peuvent contenir un ou plusieurs hétéroatomes, tels que N, O, F, Cl, P, Si, Br ou S ainsi que des groupes alkyles en C₁ à C₆ notamment.

Au sein des sels d'aryle clivables et notamment des composés de formule (III) ci-dessus, R est, de préférence, choisi parmi les groupes aryles substitués par des groupements attracteurs d'électrons tels que NO₂, C(O)H, les cétones, CN, CO₂H, NH₂ (sous forme de NH₃⁺), les esters et les halogènes. Les groupes R de type aryle particulièrement préférés sont les radicaux carboxyphényle, aminophényle, nitrophényle et phényle, lesdits radicaux étant éventuellement substitués par un ou plusieurs atomes de fluor.

Au sein des composés de formule (III) ci-dessus, A peut notamment être choisi parmi les anions inorganiques tels que les halogénures comme I⁻, Br⁻ et Cl⁻, les halogénoborates tels que le tétrafluoroborate, les perchlorates et les sulfonates et les anions organiques tels que les alcoolates et les carboxylates.

A titre de composés de formule (III), il est particulièrement avantageux d'utiliser un composé choisi dans le groupe constitué par le tétrafluoroborate de phényldiazonium, le tétrafluoroborate de 4-nitrophényldiazonium, le tétrafluoroborate de 4-bromophényldiazonium, le chlorure de 4-aminophényldiazonium, le chlorure de 4-aminométhylphényldiazonium, le chlorure de 2-méthyl-4-chlorophényldiazonium, le tétrafluoroborate de 4-benzoylbenzènediazonium, le tétrafluoroborate de 4-cyanophényldiazonium, le tétrafluoroborate du 4-carboxyphényldiazonium, le tétrafluoroborate de 4-acétamidophényldiazonium, le tétrafluoroborate de l'acide 4-phénylacétique diazonium, le sulfate de 2-méthyl-4-[(2-méthylphényl)diazényl]benzènediazonium, le chlorure de 9,10-dioxo-9,10-dihydro-1-anthracènediazonium, le tétrafluoroborate de 4-nitronaphtalènediazonium, le tétrafluoroborate de naphtalènediazonium et le tétrafluoroborate d'hexadécafluoro-octylbenzènediazonium.

La solution réactive mise en oeuvre dans le cadre de la présente invention peut contenir un seul sel d'aryle clivable (i.e. un seul type de sel d'aryle clivable) ou plusieurs sels d'aryle clivables différents (i.e. plusieurs types de sel d'aryle clivable).

Dans le cadre de la présente invention tout comme dans le cadre de la demande internationale WO 2008/078052 **[3],** le sel d'aryle clivable peut être soit introduit dans la solution réactive en l'état, soit préparé *in situ* notamment dans cette dernière.

Lorsque le sel d'aryle clivable est préparé *in situ,* on utilise avantageusement un précurseur d'un tel sel d'aryle clivable. Par « précurseur d'un sel d'aryle clivable », on entend dans le cadre de la présente invention une molécule séparée dudit sel d'aryle clivable par une étape opératoire unique et aisée à mettre en oeuvre.

Généralement, les précurseurs présentent une stabilité plus importante que le sel d'aryle clivable dans les mêmes conditions environnementales. Par exemple, les arylamines sont des précurseurs des sels d'aryle diazonium. En effet, par simple réaction, par exemple, avec du NaNO₂ dans un milieu aqueux acide, ou avec du NOBF₄ en milieu organique, il est possible de former les sels d'aryle diazonium correspondants.

Un précurseur avantageusement mis en oeuvre dans le cadre de la présente invention est un précurseur de sels d'aryle diazonium de formule (IV) suivants :

R-NH₂ (IV),

R étant tel que précédemment défini.

A titre d'exemples non limitatifs, un précurseur susceptible d'être mis en oeuvre dans le cadre de la présente invention est, en particulier, choisi dans le groupe constitué par la 4-aminophénylamine (ou *p*-phénylènediamine ou encore 1,4-diaminophénylène), la 4-nitrophénylamine, l'acide 4-amino-benzoïque, la 4-aminométhylphénylamine et leurs dérivés fluorés.

Par « monomère polymérisable par voie radicalaire », on entend un monomère susceptible de polymériser en conditions radicalaires après amorçage par une entité chimique radicalaire. Typiquement, il s'agit d'un monomère comportant au moins une liaison de type éthylénique i.e. une molécule de type éthylénique ou une molécule à insaturation éthylénique.

Parmi ces derniers, les monomères vinyliques, notamment les monomères décrits dans les demandes internationales WO 2005/033378 et WO 2006/097611 sont particulièrement concernés **[5, 6].**

Selon une forme de réalisation particulièrement avantageuse de l'invention, le (ou les) monomère(s) vinylique(s) est(sont) choisi(s) parmi les monomères de formule (V) suivante : 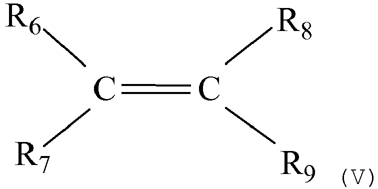 dans laquelle les groupes R₆ à R₉, identiques ou différents, représentent un atome monovalent non métallique tel qu'un atome d'halogène, un atome d'hydrogène, un groupe chimique saturé ou insaturé, tel qu'un groupe alkyle, aryle, un nitrile, un carbonyle, une amine, un amide ou un groupe -COOR₁₀ dans lequel R₁₀ représente un atome d'hydrogène ou un groupe alkyle en C₁-C₁₂ et de préférence en C₁-C₆.

Les monomères de formule (V) ci-dessus sont en particulier choisis dans le groupe constitué par l'acide acrylique, l'acétate de vinyle, l'acrylonitrile, le méthacrylonitrile, le méthacrylate de méthyle, le méthacrylate d'éthyle, le méthacrylate de butyle, le méthacrylate de propyle, le méthacrylate d'hydroxyéthyle (HEMA), le méthacrylate d'hydroxypropyle, le méthacrylate de glycidyle et leurs dérivés ; les acrylamides et notamment les méthacrylamides d'amino-éthyle, -propyle, -butyle, -pentyle et -hexyle, les cyanoacrylates, les di-acrylates et di-méthacrylates, les tri-acrylates et tri-méthacrylates, les tétra-acrylates et tétra-méthacrylates (tels que le pentaérythritol tétraméthacrylate), le styrène et ses dérivés, le parachloro-styrène, le pentafluoro-styrène, la N-vinyl pyrrolidone, la 4-vinyl pyridine, la 2-vinyl pyridine, les halogénures de vinyle, d'acryloyle ou de méthacryloyle, le di-vinylbenzène (DVB), et plus généralement les agents réticulants vinyliques ou à base d'acrylate, de méthacrylate, et de leurs dérivés.

La quantité de sels d'aryle clivables, de précurseurs de sels d'aryle clivables, de monomères polymérisables par voie radicalaire utilisables dans la solution de réaction sont conformes aux quantités envisagées dans la demande internationale WO 2008/078052 **[3].**

De même, la solution réactive mise en oeuvre dans le cadre de la présente invention et une solution liquide pouvant contenir, en tant que solvant, un solvant qui peut être :
- soit un solvant protique, i.e. un solvant qui comporte au moins un atome d'hydrogène susceptible d'être libéré sous forme de proton et avantageusement choisi dans le groupe constitué par l'eau, l'eau désionisée, l'eau distillée, acidifiées ou basiques, l'acide acétique, les solvants hydroxylés comme le méthanol et l'éthanol, les glycols liquides de faible poids moléculaire tels que l'éthylèneglycol, et leurs mélanges ;
- soit un solvant aprotique, i.e. un solvant qui n'est pas susceptible de libérer un proton ou d'en accepter un dans des conditions non extrêmes et avantageusement choisi parmi la diméthylformamide (DMF), l'acétone, l'acétonitrile et le diméthyl sulfoxyde (DMSO) ;
- soit un mélange d'au moins un solvant protique et d'au moins un solvant aprotique.

La solution réactive mise en oeuvre dans le cadre de la présente invention peut également contenir un (ou plusieurs) tensio-actif(s) notamment choisi(s) dans le groupe constitué par les tensio-actifs anioniques, les tensio-actifs cationiques, les tensio-actifs zwitterioniques, les tensio-actifs amphotères et les tensio-actifs neutres (non-ioniques) et, notamment, les tensio-actifs décrits dans la demande internationale WO 2008/078052 **[3].** Typiquement la concentration en tensio-actifs sera comprise entre 0,5 mM et 5 M environ, de préférence entre 0,1 mM et 150 mM environ.

La solution réactive mise en oeuvre dans le cadre de la présente invention peut également contenir un composé apte à encager le sel d'aryle clivable tel qu'une cyclodextrine.

La procédé selon la présente invention comprend, plus particulièrement, les étapes consistant à :
a) mettre le polymère de polydopamine ou un dérivé de celui-ci en contact avec une solution comprenant au moins un sel d'aryle clivable et éventuellement au moins un monomère polymérisable par voie radicalaire différent dudit sel d'aryle clivable ;
b) soumettre ladite solution à des conditions non électrochimiques, moyennant quoi des entités radicalaires sont formées à partir dudit sel d'aryle clivable et un polymère organique est greffé sur le polymère de polydopamine ou le dérivé de celui-ci.

Toutes les conditions non électrochimiques envisagées dans la demande internationale WO 2008/078052 **[3]** sont utilisables dans le cadre de l'étape (b) de la présente invention. Pour rappel, de telles conditions non électrochimiques sont des conditions qui permettent la formation d'entités radicalaires à partir d'un sel d'aryle clivable en l'absence de l'application d'une quelconque tension électrique à la solution le contenant, au polymère de polydopamine ou à son dérivé, ou au substrat sur lequel le polymère de polydopamine ou son dérivé est éventuellement déposé.

Ces conditions impliquent des paramètres tels que, par exemple, la température, la nature du solvant présent dans la solution réactive, la présence d'un additif particulier, l'agitation, la pression alors que le courant électrique n'intervient pas lors de la formation des entités radicalaires. Les conditions permettant la formation d'entités radicalaires sont nombreuses et ce type de réaction est connu et étudié en détail dans l'art antérieur.

Il est ainsi par exemple possible d'agir sur l'environnement thermique, cinétique, chimique ou photochimique du sel d'aryle clivable afin de le déstabiliser pour qu'il forme une entité radicalaire. Il est bien entendu possible d'agir simultanément sur plusieurs de ces paramètres.

Dans le cadre de la présente invention, les conditions permettant la formation d'entités radicalaires sont typiquement choisies dans le groupe constitué par les conditions thermiques, les conditions cinétiques, les conditions chimiques, les conditions photochimiques et leurs combinaisons auxquelles le sel d'aryle clivable est soumis. Avantageusement, les conditions mises en oeuvre dans le cadre de la présente invention sont choisies dans le groupe constitué par les conditions thermiques, les conditions chimiques, les conditions photochimiques et leurs combinaisons entre elles et/ou avec les conditions cinétiques. Les conditions mises en oeuvre dans le cadre de la présente invention sont plus particulièrement des conditions chimiques ou photochimiques et, tout particulièrement, des conditions chimiques ou photochimiques.

L'environnement thermique est fonction de la température. Son contrôle est aisé avec les moyens de chauffage habituellement employés par l'homme du métier. L'utilisation d'un environnement thermostaté présente un intérêt particulier puisqu'il permet un contrôle précis des conditions de réaction.

L'environnement cinétique correspond essentiellement à l'agitation du système et aux forces de frottement. Il ne s'agit pas ici de l'agitation des molécules en elle-même (élongation de liaisons etc.), mais du mouvement global des molécules. Ainsi, la solution contenant le sel d'aryle clivable est soumise à une agitation mécanique et/ou à un traitement aux ultra-sons. Dans une première variante, on soumet la solution contenant le sel d'aryle clivable à un traitement aux ultrasons.

Enfin, l'action de rayonnements divers tels que rayonnements dans le visible, rayons UV notamment aux moyens d'une lampe UV, d'une lampe excimère ou d'un laser. La longueur d'onde employée sera choisie, sans aucun effort inventif, en fonction du sel d'aryle clivable utilisé.

Dans le cadre des conditions chimiques, on emploie un ou plusieurs amorceur(s) chimique(s). La présence d'amorceurs chimiques est souvent couplée à des conditions environnementales non chimiques, telles qu'exposées ci-dessus. Typiquement, un amorceur chimique mis en oeuvre dans les conditions environnementales choisies agit sur le sel d'aryle clivable et engendre, à partir de celui-ci, la formation d'entités radicalaires. Il est également possible d'employer des amorceurs chimiques dont l'action n'est pas liée essentiellement aux conditions environnementales et qui peuvent agir sur de vastes plages de conditions thermiques ou encore cinétiques. L'amorceur sera de préférence adapté à l'environnement de la réaction, par exemple au solvant employé.

Il existe de nombreux amorceurs chimiques. On en distingue généralement trois types en fonction des conditions environnementales employées :
- les amorceurs thermiques dont les plus courants sont les peroxydes ou les composés azoïques. Sous l'action de la chaleur, ces composés se dissocient en radicaux libres. Dans ce cas, la réaction est effectuée à une température minimum correspondant à celle nécessaire à la formation de radicaux à partir de l'amorceur. Ce type d'amorceurs chimiques est en général utilisé spécifiquement dans un certain intervalle de température, en fonction de leur cinétique de décomposition ;
- les amorceurs photochimiques permettent la production de radicaux par des mécanismes plus ou moins complexes. Le Bu₃SnH et l'I₂ appartiennent aux amorceurs photochimiques;
- les amorceurs essentiellement chimiques, ce type d'amorceurs agissant rapidement et dans des conditions normales de température et de pression sur le sel d'aryle clivable pour lui permettre de former des radicaux. De tels amorceurs ont généralement un potentiel d'oxydoréduction qui est inférieur au potentiel de réduction du sel d'aryle clivable utilisé dans les conditions de réaction. Selon la nature du sel d'aryle clivable, il peut ainsi s'agir par exemple d'un métal réducteur, tel que du fer, zinc, cuivre ou nickel ; d'un métallocène ; d'un réducteur organique comme l'acide hypophosphoreux (H₃PO₂) ou l'acide ascorbique ; d'une base organique ou inorganique dans des proportions suffisantes pour permettre une déstabilisation du sel d'aryle clivable.

Avantageusement, le métal réducteur utilisé en tant qu'amorceur chimique se présente sous forme finement divisée, comme de la laine (également appelée plus communément « paille ») métallique ou de la limaille métallique.

La présente invention concerne également un polymère de polydopamine ou un de ses dérivés, modifié par un polymère organique, susceptible d'être préparé par un procédé selon l'invention.

Comme précédemment explicité, le polymère organique greffé sur le polymère de polydopamine ou sur son dérivé présente une structure chimique particulière, directement liée au greffage chimique radicalaire. En effet, la 1^{ère} unité (ou le 1^{er} motif) de ce polymère organique, covalemment liée au polymère de polydopamine ou à son dérivé, dérive d'un sel d'aryle clivable mis en contact avec le polymère de polydopamine ou son dérivé. Les autres motifs du polymère organique sont, quant à eux, issus de sel(s) d'aryle clivable(s) ou éventuellement de monomère(s) polymérisable(s) par voie radicalaire distinct(s) d'un sel d'aryle clivable.

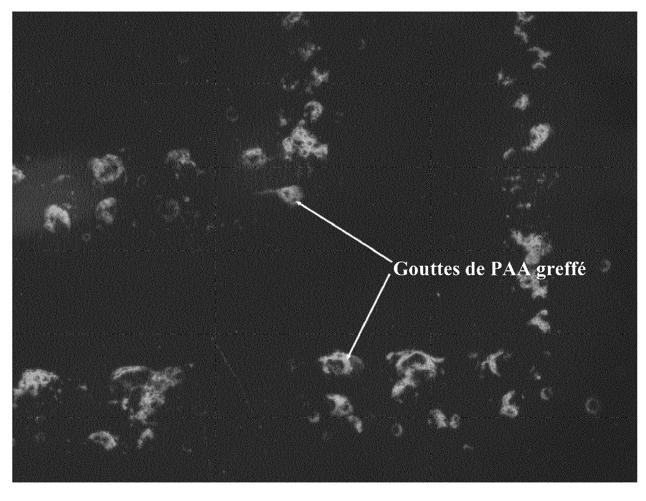

D'autres caractéristiques et avantages de la présente invention apparaîtront encore à l'homme du métier à la lecture des exemples ci-après donnés à titre illustratif et non limitatif, en référence à la figure unique annexée.

### BRÈVE DESCRIPTION DES DESSINS

La Figure unique présente une image optique de gouttes de polymère du type poly(acide acrylique) obtenu par le procédé de greffage chimique radicalaire et impression jet d'encre sur un film de polydopamine.

### EXPOSÉ DÉTAILLÉ DE MODES DE RÉALISATION PARTICULIERS

### I. Préparation de la couche de polydopamine.

La polydopamine mise en oeuvre dans la partie expérimentale se présente sous forme d'une couche déposée sur une lame en un substrat tel que du verre ou de l'or.

Dans un bécher de 200 ml muni d'un support téflon sur lequel les lames sont placées à la verticale et d'un barreau aimanté, sont versés, sous agitation, 140 ml d'eau désionisée et 0,287 g de chlorhydrate de dopamine (234,09 g/mole ; 8,8 10⁻³M).

Est ajouté 0,856 g de Tris (Tris (hydroxyméthyl)aminométhane ; 121,14 g/mole ; 5.10⁻² M). La réaction est laissée pendant 1 h.

Au départ, la solution est orangée puis prend une teinte foncée (marron/noir). En présence d'oxygène, se produit une réaction dite « de polymérisation oxydante » qui conduit à la polydopamine ou polyDHEPA. La coloration brune est liée à la formation du composé polymérisé.

Les lames sont ensuite rincées avec de l'eau désionisée par jets, éthanol et acétone. Elles sont séchées par soufflage azote.

### II. Greffage d'un sel de diazonium fluoré.

Les sels de diazonium fluorés sont généralement utilisés en milieu organique pour des raisons évidentes de solubilité. Afin de travailler en milieu aqueux, des molécules de cyclodextrine sont introduites dans la solution de réaction et ce, pour solubiliser les sels fluorés. Les cyclodextrines encagent les aromatiques fluorés et les soustraient au contact de l'eau sans leur faire perdre leur potentiel de réactivité comme sel de diazonium.

Dans un tube de 12 ml muni d'un bouchon à vis, d'un support en téflon et d'un barreau aimanté, sont introduits 10 ml d'eau désionisée et 0,032 g de α-cyclodextrine (972 g/mole ; 3,3.10⁻³ M). Lorsque la cyclodextrine est dissoute, sont ajoutés 2 mg de tétrafluoroborate d'hexadécafluoro-octylbenzène diazonium (HDFOBDT ; C₈F₁₇C₆H₄N₂⁺ /BF₄⁻ ; 610 g/mole ; 3,3.10⁻⁴ M). Les lames sont introduites dos à dos puis 12 µl d'une solution d'acide ascorbique à 0,029 M soit à une concentration finale de 3,5.10⁻⁵ M sont ajoutés. La solution est limpide.

Après 1 h de réaction, les lames sont passées sous l'eau du robinet pour enlever les molécules de cyclodextrine puis elles sont soumises aux jets d'eau désionisée, d'éthanol et d'acétone. Elles sont séchées sous flux d'azote.

Le film organique obtenu à partir du HDFOBDT greffé sur la couche de polydopamine peut être mis en évidence par différentes techniques et notamment en mesurant l'angle de contact d'une goutte d'eau déposée sur la dopamine et comparé à l'angle de contact d'une goutte d'eau de même volume déposée sur la dopamine greffée.

### III. Greffage d'un polymère d'acide acrylique (PAA) par voie jet d'encre.

La couche de polydopamine mise en oeuvre a été préparée comme explicitée au point I et a été imprimée avec une solution dite « solution de greffage » telle que définie ci-après.

Pour améliorer la mouillabilité de la solution de greffage projetée par jet d'encre sur la polydopamine, un épaississant est ajouté dans le milieu réactionnel. Il s'agit d'un polymère d'acide polyacrylique (PAA, 30 000 g/mol).

Du 4-nitrobenzènediazonium (NBD ; 0,205 g) a été solubilisé dans une solution contenant 2 mL d'une solution acide aqueuse (H₂SO₄ à 0,5 M), 2 mL d'acide acrylique et 130 mg d'épaississant (PAA), formant ainsi la solution de greffage.

Cette solution est déposée ensuite directement sur la couche de polydopamine par impression par jet d'encre, via l'utilisation d'une imprimante commerciale EPSON Stylus Photo P50.

La polydopamine + dépôt jet d'encre est ensuite irradié par une lampe de bureau de 75 W pendant une durée de 10 min.

Dans un premier temps, la réduction des sels de diazonium s'effectue par l'irradiation dans le visible. Dans un second temps, cette irradiation est également source de chaleur et contribue vraisemblablement à l'accélération de la polymérisation de l'acide acrylique.

De cette façon, la polydopamine a été imprimée avec cette solution afin d'y introduire localement le polymère PAA (Figure unique).

### RÉFÉRENCES

[1] Article de Lee et al., 2007, « Mussel-inspired surface chemistry for multifunctional coatings », Science, vol. 318, pages 426-430.
[2] Demande internationale WO 2008/049108 déposée au nom de North-Western University et publiée le 24 avril 2008.
[3] Demande internationale WO 2008/078052 déposée au nom du CEA et publiée le 3 juillet 2008.
[4] Article de Li et al., 2006, « Electrochemical quartz crystal microbalance study on growth and property of the polymer deposit at gold electrodes during oxidation of dopamine in aqueous solutions », Thin Solid Films, vol. 497, pages 270-278.
[5] Demande internationale WO 2005/033378 au nom du CEA publiée le 14 avril 2005.
[6] Demande internationale WO 2006/097611 au nom du CEA publiée le 21 septembre 2006.

## Revendications

1. Procédé pour modifier un polymère de polydopamine ou un dérivé de celui-ci consistant à greffer, sur ledit polymère ou ledit dérivé, au moins un polymère organique par greffage chimique radicalaire en présence d'au moins un sel d'aryle clivable.

2. Procédé selon la revendication 1, **caractérisé en ce que** le dérivé de polymère de polydopamine est un polymère obtenu par polymérisation d'un composé de formule (I) : 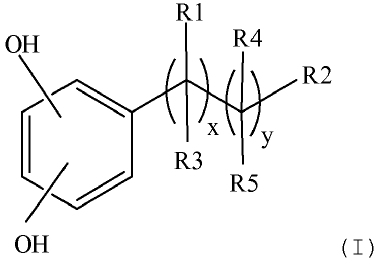 dans laquelle :
- les groupements R1, R2, R3, R4 et R5 sont indépendamment choisis dans le groupe constitué par un hydrogène, un hydroxyle, un halogénure, un thiol, un aldéhyde, un acide carboxylique, un ester carboxylique, un carboxamide, une amine primaire, une amine secondaire, un nitrile, un imidazole, un azide et un dithiocarbamate de polyhexaméthylène ;
à condition qu'au moins un groupement parmi les groupements R1, R2, R3, R4 et R5 ne soit pas un hydrogène ;
- x est égal à 0 ou représente un nombre entier compris de 1 à 10, les bornes 1 et 10 étant inclusives ; et
- y est égal à 0 ou représente un nombre entier compris de 1 à 10, les bornes 1 et 10 étant inclusives ;
à condition que x ou y soit au moins égal à 1.

3. Procédé selon la revendication 1 ou 2, **caractérisé en ce que** le dérivé de polydopamine est un polymère obtenu par polymérisation d'un composé choisi parmi la norépinephrine, la 3,4-dihydroxy-L-phénylalanine, l'ester méthylique de 3,4-dihydroxy-L-phénylalanine et un de leurs sels.

4. Procédé selon l'une quelconque des revendications précédentes, **caractérisé en ce que** les unités monomères dont est issu ledit polymère organique sont des unités dérivées d'au moins un sel d'aryle clivable et éventuellement d'au moins un monomère polymérisable par voie radicalaire avantageusement distinct d'un sel d'aryle clivable.

5. Procédé selon l'une quelconque des revendications précédentes, **caractérisé en ce que** ledit sel d'aryle clivable est choisi dans le groupe constitué par les sels d'aryle diazonium, les sels d'aryle d'ammonium, les sels d'aryle phosphonium et les sels d'aryle sulfonium.

6. Procédé selon l'une quelconque des revendications précédentes, **caractérisé en ce que** ledit sel d'aryle clivable est un composé de formule (III) suivante :
R-N₂⁺, A⁻ (III)
dans laquelle :
- A représente un anion monovalent et
- R représente un groupe aryle.

7. Procédé selon l'une quelconque des revendications 4 à 6, **caractérisé en ce que** ledit monomère polymérisable par voie radicalaire est un monomère vinylique choisi parmi les monomères de formule (V) suivante : 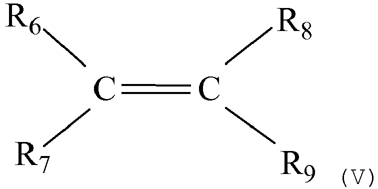 dans laquelle les groupes R₆ à R₉, identiques ou différents, représentent un atome monovalent non métallique tel qu'un atome d'halogène, un atome d'hydrogène, un groupe chimique saturé ou insaturé, tel qu'un groupe alkyle, aryle, un nitrile, un carbonyle, une amine, un amide ou un groupe -COOR₁₀ dans lequel R₁₀ représente un atome d'hydrogène ou un groupe alkyle en C₁-C₁₂ et de préférence en C₁-C₆.

8. Procédé selon l'une quelconque des revendications précédentes, **caractérisé en ce qu'**il comprend les étapes consistant à :
a) mettre le polymère de polydopamine ou un dérivé de celui-ci en contact avec une solution comprenant au moins un sel d'aryle clivable et éventuellement au moins un monomère polymérisable par voie radicalaire différent dudit sel d'aryle clivable ;
b) soumettre ladite solution à des conditions non électrochimiques, moyennant quoi des entités radicalaires sont formées à partir dudit sel d'aryle clivable et un polymère organique est greffé sur le polymère de polydopamine ou le dérivé de celui-ci.

9. Polymère de polydopamine ou dérivé de celui-ci, modifié par un polymère organique, susceptible d'être préparé par un procédé selon l'une quelconque des revendications précédentes.

## Patentansprüche

1. Verfahren zum Modifizieren eines Polydopamin-Polymers oder eines Derivats davon, umfassend das Pfropfen, auf das Polymer oder das Derivat, wenigstens eines organischen Polymers durch radikalisches chemisches Pfropfen in Anwesenheit wenigstens eines spaltbaren Arylsalzes.

2. Verfahren nach Anspruch 1, **dadurch gekennzeichnet, dass** das Polydopamin-Polymerderivat ein Polymer ist, das erhalten wird durch Polymerisation einer Verbindung der Formel (I): 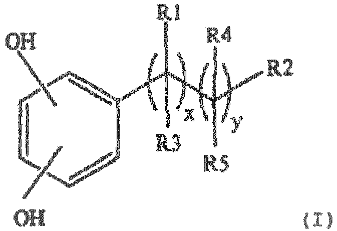 wobei:
- die Gruppen R1, R2, R3, R4 und R5 unabhängig voneinander ausgewählt sind aus der Gruppe gebildet durch einen Wasserstoff, ein Hydroxyl, ein Halogenid, ein Thiol, ein Aldehyd, eine Carboxylsäure, einen Carboxylester, ein Carboxamid, ein primäres Amin, ein sekundäres Amin, ein Nitril, ein Imidazol, ein Azid und ein Dithiocarbamat von Polyhexamethylen;
unter der Bedingung, dass wenigstens eine Gruppe aus den Gruppe R1, R2, R3, R4 und R5 kein Wasserstoff ist;
- x gleich 0 ist oder eine ganze Zahl zwischen 1 und 10 darstellt, wobei die Randwerte 1 und 10 inbegriffen sind; und
- y gleich 0 ist oder eine ganze Zahl zwischen 1 und 10 darstellt, wobei die Randwerte 1 und 10 inbegriffen sind;
unter der Voraussetzung, dass x oder y wenigstens gleich 1 ist.

3. Verfahren nach Anspruch 1 oder 2, **dadurch gekennzeichnet, dass** das Polydopamin-Derivat ein Polymer ist, das erhalten wird durch Polymerisation einer Verbindung, ausgewählt aus Norepinephrin, 3,4-Dihydroxy-L-Phenylalanin, Methylester von 3,4-Dihydroxy-L-Phenylalanin und einem ihrer Salze.

4. Verfahren nach einem der vorhergehenden Ansprüche, **dadurch gekennzeichnet, dass** die Monomereinheiten, aus denen das organische Polymer hervorgegangen ist, Einheiten sind, die von wenigstens einem spaltbaren Arylsalz abgeleitet sind und gegebenenfalls von wenigstens einem Monomer, das auf radikalischem Weg polymerisierbar ist, vorzugsweise von einem spaltbaren Arylsalz verschieden.

5. Verfahren nach einem der vorhergehenden Ansprüche, **dadurch gekennzeichnet, dass** das spaltbare Arylsalz ausgewählt ist aus der Gruppe gebildet durch die Diazonium-Arylsalze, die Amonium-Arylsalze, die Phosphonium-Arylsalze und die Sulfonium-Arylsalze.

6. Verfahren nach einem der vorhergehenden Ansprüche, **dadurch gekennzeichnet, dass** das spaltbare Arylsalz eine Verbindung der nachfolgenden Formel (III) ist:
R - N₂⁺, A⁻ (III)
wobei:
- A ein monovalentes Anion darstellt, und
- R eine Arylgruppe darstellt.

7. Verfahren nach einem der Ansprüche 4 bis 6, **dadurch gekennzeichnet, dass** das auf radikalischem Wege polymerisierbare Monomer ein Vinylmonomer ist, ausgewählt aus den Monomeren der nachfolgenden Formel (V): 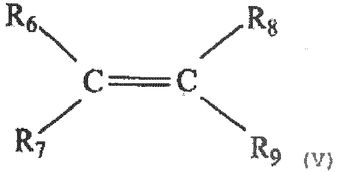 wobei die Gruppen R₆ bis R₉, die identisch oder verschieden sind, ein nichtmetallisches monovalentes Atom darstellen wie zum Beispiel ein Halogenatom, ein Wasserstoffatom, eine gesättigte oder ungesättigte chemische Gruppe wie zum Beispiel eine Alkyl- oder Arylgruppe, ein Nitril, ein Carbonyl, ein Amin, ein Amid oder eine Gruppe -COOR₁₀, wobei R₁₀ ein Wasserstoffatom darstellt oder eine Alkylgruppe mit C₁-C₁₂ und vorzugsweise mit C₁-C₆.

8. Verfahren nach einem der vorhergehenden Ansprüche, **dadurch gekennzeichnet, dass** es die folgenden Schritte umfasst:
a) Inkontaktbringen des Polydopamin-Polymers oder eines Derivats davon mit einer Lösung, umfassend wenigstens ein spaltbares Arylsalz und gegebenenfalls wenigstens ein von dem spaltbaren Arylsalz verschiedenes Monomer, das auf radikalischem Wege polymerisierbar ist;
b) Ausüben nicht-elektrochemischer Bedingungen auf die Lösung, mittels derer radikalische Einheiten gebildet werden ausgehend von dem spaltbaren Arylsalz, und ein organisches Polymer auf das Polydopamin-Polymer oder das Derivat davon gepfropft wird.

9. Polydopamin-Polymer oder Derivat davon, modifiziert durch ein organisches Polymer, das herstellbar ist durch ein Verfahren nach einem der vorhergehenden Ansprüche.

## Claims

1. A process for modifying a polydopamine polymer or a derivative thereof consisting in grafting, on said polymer or said derivative, at least one organic polymer by radical chemical grafting in the presence of at least one cleavable aryl salt.

2. The process according to claim 1, **characterised in that** the polydopamine polymer derivative is a polymer obtained by polymerising a compound having the formula (I): 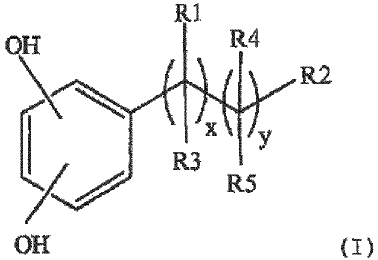 wherein:
- R1, R2, R3, R4 and R5 groups are independently selected from the group consisting of hydrogen, hydroxyl, halide, thiol, aldehyde, carboxylic acid, carboxylic ester, carboxamide, primary amine, secondary amine, nitrile, imidazole, azide and polyhexamethylene dithiocarbamate;
with the proviso that at least one group from R1, R2, R3, R4 and R5 groups is not hydrogen;
- x is equal to 0 or represents an integer between 1 and 10, the bounds 1 and 10 being inclusive; and
- y is equal to 0 or represents an integer between 1 and 10, the bounds 3 and 10 being inclusive;
with the proviso that x or y is at least equal to 1.

3. The process according to claim 1 or 2, **characterised in that** the polydopamine derivative is a polymer obtained by polymerising a compound chosen from norepinephrine, 3,4-dihyhroxy-L-phenylalanine, 3,4-dihydroxy-L-phenylalanine methyl ester and a salt thereof.

4. The process according to any of the preceding claims, **characterised in that** the monomer units from which said organic polymer comes are units derived from at least one cleavable aryl salt and possibly at least one radically polymerisable monomer advantageously distinct from a cleavable aryl salt.

5. The process according to any of the preceding claims, **characterised in that** said cleavable aryl salt is selected from the group consisting of aryl diazonium salts, aryl ammonium salts, aryl phosphonium salts and aryl sulfonium salts.

6. The process according to any of the preceding claims, **characterised in that** said cleavable aryl salt is a compound having the following formula (III):
R-N₂⁺, A⁻ (III)
wherein:
- A represents a monovalent anion and
- R represents an aryl group.

7. The process according to any of claims 4 to 6, **characterised in that** said radically polymerisable monomer is a vinyl monomer chosen from monomers having the following formula (V): 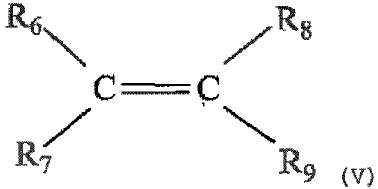 wherein the groups R₆ to R₉, identical or different, represent a non-metal monovalent atom such as a halogen atom, a hydrogen atom, a saturated or unsaturated chemical group, such as an alkyl, aryl group, a nitrile, carbonyl, amine, amide or a group -COOR₁₀ wherein R₁₀ represents a hydrogen atom or a C₁-C₁₂ and preferably C₁-C₆ alkyl group.

8. The process according to any of the preceding claims, **characterised in that** it comprises the steps of:
a) bringing the polydopamine polymer or a derivative thereof in contact with a solution comprising at least one cleavable aryl salt and possibly at least one radically polymerisable monomer different from said cleavable aryl salt;
b) subjecting said solution to non-electrochemical conditions, whereby radical entities are formed from said cleavable aryl salt and an organic polymer is grafted on the polydopamine polymer or the derivative thereof.

9. A polydopamine polymer or a derivative thereof, modified by an organic polymer, likely to be prepared by a process according to any of the preceding claims.
